# EUROPÄISCHE PATENTSCHRIFT

(11) **EP 2 732 485 B1**
(45) Veröffentlichungstag und Bekanntmachung des Hinweises auf die Patenterteilung: **30.09.2015**
(21) Anmeldenummer: 12727869.5
(22) Anmeldetag: 18.06.2012
(51) Int. Cl.: H01M 2/02, H01M 2/12

(54) **BATTERIEZELLENMODUL, VERFAHREN ZUM BETREIBEN EINES BATTERIEZELLENMODULS SOWIE BATTERIE UND KRAFTFAHRZEUG**
BATTERY CELL MODULE, METHOD FOR OPERATING A BATTERY CELL MODULE AND BATTERY AND MOTOR VEHICLE
MODULE DE CELLULES DE BATTERIE, PROCÉDÉ DE FONCTIONNEMENT D'UN MODULE DE CELLULES DE BATTERIE AINSI QUE BATTERIE ET VÉHICULE

(30) Priorität: 12.07.2011 DE 102011079037
(43) Veröffentlichungstag der Anmeldung: 21.05.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: PFLUEGER, Claus, Gerald, 71706 Markröningen (DE); ANGERBAUER, Ralf, 71696 Möglingen (DE); FINK, Holger, 70567 Stuttgart (DE)
(74) Vertreter: Bee, Joachim
(86) Internationale Anmeldenummer: PCT/EP2012/061586
(87) Internationale Veröffentlichungsnummer: WO 2013/007478

(56) Entgegenhaltungen:
- WO-A1-2010/067602
- WO-A1-2012/095201
- US-A- 5 281 492
- US-A- 5 876 872

## Beschreibung

Die vorliegende Erfindung betrifft ein Batteriezellenmodul, welches eine Mehrzahl von Batteriezellen umfasst. Außerdem betrifft die vorliegende Erfindung ein Verfahren zum Betreiben eines erfindungsgemäßen Batteriezellenmoduls sowie eine Batterie, die mehrere der erfindungsgemäßen Batteriezellenmodule aufweist, und ein Kraftfahrzeug.

Dabei ist die vorliegende Erfindung insbesondere auf Lithium-Ionen-Batteriezellen beziehungsweise Lithium-Ionen-Batterien oder entsprechende Batteriezellenmodule bezogen.

### Stand der Technik

Es besteht ein erheblicher Bedarf an Batterien für breite Anwendungsbereiche, beispielsweise für Fahrzeuge, stationäre Anlagen, wie zum Beispiel Windkraftanlagen, und mobile Elektronikgeräte, wie zum Beispiel Laptops und Kommunikationsgeräte. An diese Batterien werden sehr hohe Anforderungen hinsichtlich Zuverlässigkeit, Lebensdauer und Leistungsfähigkeit gestellt.
Prädestiniert für ein breites Einsatzgebiet von Applikationen ist die Lithium-Ionen-Technologie. Sie zeichnet sich unter anderem durch hohe Energiedichte und eine äußerst geringe Selbstentladung aus.
Lithium-Ionen-Zellen besitzen mindestens eine positive und eine negative Elektrode (Kathode beziehungsweise Anode), die mittels einer Elektrolytkomponente Lithium-Ionen (Li⁺) reversibel ein- (Interkalation) oder wieder auslagern (Deinterkalation) können.

Die Interkalation erfolgt dabei beim Ladeprozess der Batteriezelle, und die Deinterkalation erfolgt bei der Entladung der Batteriezelle zur Stromversorgung von elektrischen Aggregaten.

Zur Interkalation sowie Deinterkalation ist die Anwesenheit eines sogenannten Lithium-Ionen-Leitsalzes notwendig. Sowohl für Batteriezellen geringerer Ladung, wie sie zum Beispiel in tragbaren elektronischen Geräten Anwendung finden, als auch in Batteriezellen für den automotiven Bereich wird als Lithium-Leitsalz Lithium-hexa-Fluorophosphat (LiPF₆) eingesetzt. Dieses Leitsalz ist gegenüber Feuchtigkeit äußerst reaktiv, so dass Hydrolyse erfolgen kann, bis zur Entstehung von Fluorwasserstoff (HF).

Ein kritischer Punkt bei der Lithium-Ionen-Technologie ist das Verhalten der jeweiligen Zelle beziehungsweise der daraus assemblierten Batterie bei Überladung. Dabei kann es zu einer Kathodenzersetzung unter Freisetzung von starken Oxidationsmitteln kommen. Das kann zu einer starken exothermen Reaktion im Elektrolyten führen. Dabei werden heiße Gase entwickelt, die den Druck im Batteriezelleninnenraum erhöhen.

Dieser Druck kann eine unkontrollierbare Temperaturerhöhung in der Zelle (thermisches Durchgehen, sogenannter "thermal runaway") bewirken, sowie eine druckbedingte Öffnung einer Sicherheitseinrichtung der Zelle wie z. B. eines sogenannten "safety vent". Wenn keine Öffnung der Zelle erfolgt, besteht die Gefahr einer Explosion der Zelle.

Eine Sicherheitseinrichtung in Form eines sogenannten "safety vent" ist der US 2009/0068550 A1 entnehmbar, welches bei einem unzulässigen Überdruck in einer Batteriezelle eine Entgasungsöffnung freigibt.

Derartige Entgasungsöffnungen können dabei als Sollbruchstellen ausgestaltet sein. Die austretenden Gase enthalten Elektrolyt und reagieren mit Wasser zu Flusssäure. Um Gefahren für Aggregate und Personen zu vermeiden, ist es notwendig, dass das aus den Batteriezellen ausgetretene Gas kontrolliert und gezielt abgeführt wird.

Ein Auffangen und Abführen gefährlicher Medien übernimmt oftmals ein sogenannter Moduldeckel, der auf dem Batteriezellenmodul angeordnet ist.

Die DE 20 2004 004 335 U1 offenbart in diesem Zusammenhang ein Entgasungssystem für Akkumulatoren, bei dem entwichenes Gas durch ein Labyrinth strömen muss, um Feststoffe und Flüssigkeiten abzuscheiden, bevor das Gas in eine sogenannte Gasaustrittskammer im Deckel gelangt. Diese Ausgestaltung ist mit einem relativ hohen konstruktiven und demzufolge auch fertigungstechnischen Aufwand verbunden.

Die DE 102 57 918 B4 offenbart einen Akkumulator, auf dem ein sogenannter Blockdeckel angeordnet ist, der wiederum einen Ober- und einen Unterdeckel aufweist. In dem Blockdeckel sind, der Anzahl der Batteriezellen entsprechend, jeweils Gasräume zur Säureabscheidung angeordnet. Auch diese Ausführungsform eines Gas aufnehmenden Deckels ist, bedingt durch die konstruktive Ausführung, bei der Fertigung und Montage insbesondere bei hohen Stückzahlen relativ aufwendig und kostenintensiv.

### Offenbarung der Erfindung

Vorgeschlagen wird erfindungsgemäß ein Batteriezellenmodul, umfassend eine Mehrzahl von Batteriezellen, welche insbesondere Lithium-Ionen-Batteriezellen sein können. Die Batteriezellen weisen jeweils eine Entgasungsöffnung auf. Das Batteriezellenmodul umfasst weiterhin einen mehreren Batteriezellen zugeordneten Gasaufnahmeraum zur zumindest temporären Aufnahme von aus diesen Batteriezellen entwichenem Gas, wobei das Volumen des Gasaufnahmeraums unmittelbar mit den Entgasungsöffnungen verbunden ist.

Das heißt, dass der Gasaufnahmeraum vorzugsweise allen Batteriezellen des Batteriezellenmoduls gemeinsam zugeordnet ist und somit mehreren Batteriezellen gleichzeitig zur Verfügung steht.

Somit muss keine Umlenkung der Strömung der aus Entgasungsöffnungen austretenden Gase erfolgen, wodurch eine einfache und kostengünstige Gassammlung und Gasabfuhr ermöglicht wird.

Bevorzugt ist eine direkte Verbindung des Volumens des Gasaufnahmeraums mit den Entgasungsöffnungen, das heißt, ohne dass eine Durchströmung von zwischengeordneten Kammern notwendig ist. Gegebenenfalls erfolgt nur eine Durchströmung von relativ kurzen Leitungsstutzen. Dadurch kann bei Erzeugung einer Strömung im Gasaufnahmeraum effizient ein Unterdruck an allen Entgasungsöffnungen erzeugt werden, so dass austretendes Gas sicher und schnell ableitbar ist.

Erfindungsgemäß kann sich der Öffnungsbereich des Gasaufnahmeraums über mehrere Batteriezellen erstrecken.

In dieser Ausgestaltung ist die Abdichtung des Deckels gegenüber den Flächen der Batteriezellen vorzugsweise vollständig realisiert, das heißt, wenigstens fluiddicht und in bevorzugter Ausführungsform vollständig gasdicht. Der Deckel liegt abdichtend an mehreren Batteriezellen an, wobei derselbe Öffnungsbereich über mehreren Batteriezellen angeordnet ist, so dass das aus diesen mehreren Batteriezellen ausweichende Gas durch denselben Öffnungsbereich in den Gasaufnahmeraum des Deckels gelangen kann. Die Abdichtung erfolgt dabei durch ein zweckmäßiges Dichtungselement am Deckel und/oder an den Batteriezellen, wie zum Beispiel durch eine Moosgummidichtung. Die Flächen der Batteriezellen, an denen der Deckel anliegt, sind vorzugsweise die jeweiligen Deckflächen der Batteriezellen, aus denen die Terminals herausragen.

Vorzugsweise liegen die Batteriezellen aneinander an oder es sind zwischen den Batteriezellen Zwischenschichten angeordnet, so dass in dem Bereich der Batteriezellen, an dem dichtend der Deckel anliegt, eine im Wesentlichen ununterbrochene Oberfläche des Batteriezellenmoduls ausgebildet ist. Das heißt, dass es keine Abstände zwischen den Batteriezellen gibt, die nicht mit festem und abdichtbarem Material ausgefüllt sind, so dass eine Abdichtung des mehrere Batteriezellen überbrückenden Gasaufnahmeraumes beziehungsweise seines Öffnungsbereiches gegenüber den Batteriezellen erfolgen kann. Durch diese erfindungsgemäße Ausgestaltung ist es nicht mehr notwendig, die Batteriezellen eines Moduls in einem extra Gehäuse anzuordnen, da durch die Ausgestaltung mit einer ununterbrochenen Oberfläche die Abdichtung des nach unten offenen Gasaufnahmeraums möglich ist. Dadurch, dass erfindungsgemäß das Batteriezellenmodul kein Gehäuse mehr aufweisen muss, werden ebenfalls fertigungstechnische Vorteile erzielt sowie eine Gewichtsreduktion realisiert.

Die von dem Öffnungsbereich überdeckte Fläche kann dem Bereich der Projektion des Gasaufnahmeraums auf die vom Deckel überlagerten Flächen der Batteriezellen entsprechen. Mit der Projektion ist dabei eine senkrechte Projektion des Gasaufnahmeraumes auf die vom Deckel überlagerten Flächen gemeint. Das heißt, dass die maximale Breite und Länge des Gasaufnahmeraums im Wesentlichen die Fläche der Öffnung des Gasaufnahmeraums in Richtung der Batteriezellen definiert. Mit anderen Worten ist die maximale Querschnittsfläche des Gasaufnahmeraums die des Öffnungsbereichs. Die Erfindung ist jedoch nicht auf eine derartige Ausgestaltung eingeschränkt, sondern es kann das erfindungsgemäße Batteriezellenmodul auch derart ausgebildet sein, dass die von dem Öffnungsbereich abgedeckte Fläche der Batteriezellen kleiner ist als der Bereich der Projektion des Gasaufnahmeraums auf die vom Deckel abgedichteten Flächen.

In einer weiteren Ausführungsalternative weist der Gasaufnahmeraum mehrere Gaseintrittsöffnungen auf, die mit jeweils einer Entgasungsöffnung einer Batteriezelle strömungstechnisch verbunden sind. Das heißt, dass in dieser Ausführungsform jeweils eine Gaseintrittsöffnung des Gasaufnahmeraums mit einer Entgasungsöffnung einer Batteriezelle gekoppelt ist. Dabei ist die mechanische Kopplungsstelle vorzugsweise mit sehr geringer Länge ausgeführt. Der Vorteil dieser Ausgestaltung liegt im geringen Aufwand zur Abdichtung des Gasaufnahmeraums gegenüber den Batteriezellen, da die Befestigung der Entgasungsöffnungen direkt an den Gaseintrittsöffnungen realisiert ist, nämlich vorzugsweise mittels kurzer Leitungsstutzen beziehungsweise Leitungen, die ein Verhältnis von Länge L zum Durchmesser D von L/D ≤ 0,5 haben.

Dadurch ist in einfacher und kostengünstiger Weise eine Ableitung der aus Batteriezellen austretenden aggressiven Medien möglich.

Vorzugsweise ist vorgesehen, dass der Deckel unabhängig von seiner Ausbildung mit nur einem großen Öffnungsbereich oder mit mehreren Gaseintrittsöffnungen einwandig ausgestaltet ist, wobei der Gasaufnahmeraum im Deckel durch eine bereichsweise im Wesentlichen konkave Ausgestaltung ausgebildet ist. Insbesondere ein solcher Deckel ist fertigungstechnisch sehr einfach zu realisieren. Die Erfindung ist dabei nicht auf die einwandige Ausgestaltung des Deckels beschränkt, sondern es kann der Deckel auch derart ausgestaltet sein, dass er aus mehreren Schichten aufgebaut ist.

Unter der erwähnten konkaven Ausgestaltung ist auch eine eckige Raumbegrenzung zu verstehen, die im Wesentlichen eine Raumausbildung in die von den Batteriezellen abgewandte Richtung aufweist. Diese konkave Ausgestaltung kann durch Umformung eines einschichtigen Deckelmaterials realisiert sein oder auch durch eine Herausarbeitung von Vollmaterial aus dem Deckelmaterial.

In der Ausgestaltungsvariante mit mehreren Gaseintrittsöffnungen ist vorteilhafterweise vorgesehen, dass im Verbindungsbereich zwischen einem eine jeweilige Entgasungsöffnung ausbildenden Material und einem eine jeweilige Gaseintrittsöffnung ausbildendenden Material wenigstens eine mehrschenklige Dichtung angeordnet ist.

Diese Dichtung kann zum Beispiel eine V-Ring-Dichtung sein, das heißt, eine Dichtung mit zwei Schenkeln, die in unbelastetem Zustand gespreizt sind und im montierten und belasteten Zustand im Wesentlichen parallel zueinander verlaufen, wobei wenigstens ein Schenkel aufgrund seiner elastischen Eigenschaft eine Abdichtungswirkung gegenüber einem, eine jeweilige Entgasungsöffnung ausbildenden, Material oder gegenüber einem, eine Gaseintrittsöffnung ausbildenden, Material mittels seiner Rückstellkraft verbessert.

Durch Gasdruck im Gasaufnahmeraum können die Schenkel auseinander gedrückt werden, wodurch die Dichtungswirkung weiter verstärkt wird.

Zur Ableitung des im Gasaufnahmeraum aufgenommenen Gases ist in vorteilhafter Ausgestaltung vorgesehen, dass dieser wenigstens eine Auslassöffnung aufweist. An der Auslassöffnung kann eine Anschlusseinrichtung zum Anschluss einer Leitung, wie zum Beispiel eines Schlauches, vorgesehen sein, um das entwichene Gas vom Batteriezellenmodul wegzutransportieren und gezielt dort in die Umgebung zu entlassen, wo keine Gefährdung durch das Gas besteht. Die Anschlusseinrichtung kann zum Beispiel in Form eines T-Rohrstückes vorliegen, dessen beide Rohrstutzen zum Anschluss jeweils eines Schlauches ausgebildet sind, so dass mehrere Anschlusseinrichtungen in einfacher Weise in Reihe miteinander verbunden werden können, wodurch der Aufwand zur Abführung der Gase aus mehreren Batteriezellen verringert wird.

Im Fall eines Überdrucks in einer Batteriezelle öffnet sich deren Entgasungsöffnung, so dass Gas aus der Batteriezelle in den Gasaufnahmeraum gelangt. Dieser Überdruck bewirkt, dass das Gas nach Aufnahme im Gasaufnahmeraum durch die Anschlusseinrichtung von der Batteriezelle wegtransportiert wird.

An die Auslassöffnung kann ein Rückschlagventil angeschlossen sein, wobei dieses Rückschlagventil vorzugsweise ein Lippenventil ist, welches auch unter der englischen Bezeichnung duck bill valve bekannt ist. Dieses Lippenventil kann direkt an die Auslassöffnung oder an eine mit der Auslassöffnung gekoppelte Leitung angeschlossen sein. Das Lippenventil ermöglicht Gasströmung aus dem Gassammelraum heraus und verhindert eine Gasströmung in umgekehrter Richtung.

In vorteilhafter Ausgestaltung weist das Lippenventil eine Sollbruchstelle auf, die derart ausgestaltet ist, dass in ihr bei Überschreitung eines bestimmten Gasdrucks im Gassammelraum ein Riss entsteht, der eine Öffnung entstehen lässt, aus der Gas aus dem Gassammelraum ausströmbar ist. Der Riss beziehungsweise die Sollbruchstelle entsteht bevorzugt in dem Bereich, in dem die Lippen aneinander anliegen beziehungsweise aneinander stoßen. Bei spitzwinkliger Anordnung der Lippenflächen zueinander bewirkt Druckerhöhung in der äußeren Umgebung eine Druckbeaufschlagung der Lippenflächen von außen, so dass diese aneinander gedrückt werden und eine Dichtungswirkung herbeiführen.

Es wird erfindungsgemäß außerdem ein Verfahren zum Betreiben eines Batteriezellenmoduls mit Lippenventil zur Verfügung gestellt, bei dem bei Überschreitung des bestimmten Gasdrucks im Gassammelraum die Öffnung erzeugt wird, und bei danach erfolgender Unterschreitung des bestimmten Gasdrucks im Gassammelraum das Lippenventil den Gassammelraum im Wesentlichen gegen die Umgebung abdichtet und/oder ein Ausströmen von Gas aus dem Gassammelraum im Wesentlichen verhindert. Vor erstmaliger Öffnung der Sollbruchstelle und bei Unterschreitung des bestimmten Gasdrucks im Gassammelraum verhindert das Lippenventil ein Ausströmen von Gas aus dem Gassammelraum durch gasdicht miteinander verbundene Lippen beziehungsweise Flächenelemente. Kommt es jedoch zu einem unzulässigen Überdruck im Gasaufnahmeraum, reißt der Verbindungsbereich zwischen den Lippen beziehungsweise zwischen den Flächenelementen und gibt die Öffnung frei.

Die Verhinderung einer Gasausströmung beziehungsweise die Abdichtung nach erfolgter Öffnung des Lippenbereiches bei Unterschreitung des bestimmten Drucks wird durch Anlage der die Öffnung ausbildbaren Bereiche der Lippen ausreichend realisiert. Die Anlage dieser Bereiche wird durch Elastizitätskräfte der Lippen beziehungsweise deren, die Öffnung ausbildbare, Bereiche ermöglicht.

Dabei ist eine Abdichtung des Gassammelraums gegen die Umgebung nicht in dem Maße möglich, wie sie durch die Dichtungswirkung eines ungeöffneten beziehungsweise ungerissenen Lippenventils gewährleistet wurde, jedoch ist eine im Wesentlichen ausreichende Dichtungswirkung erzielbar.

Es wird außerdem erfindungsgemäß eine Batterie, insbesondere eine Lithium-Ionen-Batterie, zur Verfügung gestellt, die mehrere der erfindungsgemäßen Batteriezellenmodule umfasst, wobei die Batteriezellenmodule in einem Gesamtgehäuse angeordnet sind und Auslassöffnungen der Batteriezellenmodule strömungstechnisch mit einer Entgasungsleitung verbunden sind, die an einen Gasauslass im Gesamtgehäuse angeschlossen ist. Das heißt, dass nicht jedes einzelne Batteriezellenmodul ein Gehäuse aufweist, sondern dass die Batteriezellenmodule in einem alle Batteriezellenmodule umfassenden Gesamtgehäuse angeordnet sind. Die jeweiligen Auslassöffnungen, die an die Gasaufnahmeräume der Batteriezellenmodule angeschlossen sind, sind strömungstechnisch mit wenigstens einer Entgasungsleitung verbunden, durch die das aus den Batteriezellen entwichene Gas transportiert werden kann, bis es aus einem Gasauslass, welcher im Gesamtgehäuse angeordnet ist, gezielt und kontrolliert in die Umgebung abgegeben werden kann.

Erfindungsgemäß wird außerdem ein Kraftfahrzeug, insbesondere ein elektromotorisch angetriebenes Kraftfahrzeug zur Verfügung gestellt, welches wenigstens ein erfindungsgemäßes Batteriezellenmodul oder eine erfindungsgemäße Batterie aufweist, wobei das Batteriezellenmodul beziehungsweise die Batterie mit einem Antriebssystem des Kraftfahrzeuges verbunden ist.

Durch die erfindungsgemäße Konstruktion des Batteriezellenmoduls sowie auch der Batterie ist ein sicheres Auffangen und Ableiten der in den Batteriezellen gegebenenfalls entstandenen Gase beziehungsweise von Elektrolyt realisierbar. Dabei sind das erfindungsgemäße Batteriezellenmodul sowie auch die Batterie fertigungstechnisch und montagetechnisch einfach und mit erhöhter Sicherheit gegen Montagefehler herstellbar. Gleichzeitig wird einer Beschädigung und/oder Verschmutzung benachbarter Batteriezellen bei Entgasung einer Batteriezelle vorgebeugt. Dies wiederum bewirkt eine erhöhte Sicherheit vor aggressiven Medien für das Reparatur- beziehungsweise Wartungspersonal, welche das Batteriezellenmodul mit geringem Aufwand und geringen Kosten instand setzen können.

### Zeichnungen

Die Erfindung wird im Folgenden anhand der in den beiliegenden Zeichnungen dargestellten Ausführungsbeispiele erläutert. Es zeigen dabei:
Figur 1 eine Batteriezelle in perspektivischer Ansicht,
Figur 2 einen Deckel in Ansicht von oben,
Figur 3 einen Deckel in Ansicht von unten,
Figur 4 ein erfindungsgemäßes Batteriezellenmodul in perspektivischer Ansicht,
Figur 5 ein erfindungsgemäßes Batteriezellenmodul in Ansicht von der Seite.
Figur 6 ein erfindungsgemäßes Batteriezellenmodul in einer weiteren Ausführungsform in perspektivischer Ansicht,
Figur 7 den Deckel des in Figur 6 dargestellten Batteriezellenmoduls in perspektivischer Ansicht,
Figur 8 schematisch den in Figur 7 dargestellten Deckel des Batteriezellenmoduls mit daran angeschlossenem Lippenventil, und
Figur 9 in einer Schnittdarstellung einen Bereich der zwischen Batteriezellenmodul und Deckel verwendeten Dichtung.

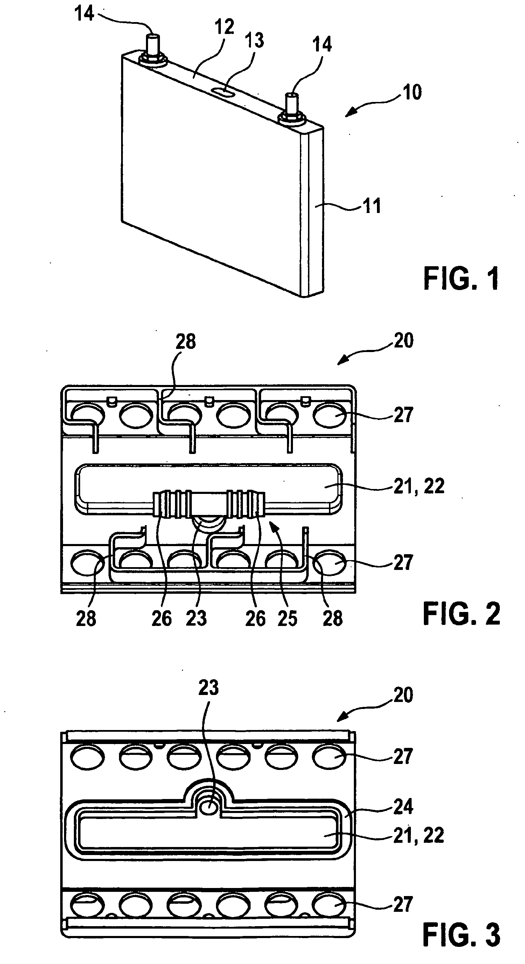

In Figur 1 ist die bevorzugt im erfindungsgemäßen Batteriezellenmodul verwendete Batteriezelle 10 dargestellt. Diese Batteriezelle 10 umfasst ein Batteriezellengehäuse 11, an dessen Oberseite, an der auch die Terminals 14 angeordnet sind, die vom Gasaufnahmeraum 21 abgedeckte Fläche 12 angeordnet ist. In dieser Fläche 12 befindet sich auch die Entgasungsöffnung 13, die zum Beispiel als eine Sollbruchstelle oder als ein Überlastventil ausgestaltet sein kann, um im Fall eines unzulässigen Überdrucks in der Batteriezelle 10 Gas aus dem Batteriezellengehäuse 11 herauszulassen.

In den Figuren 2 und 3 ist eine Ausführungsform des Deckels 20 des erfindungsgemäßen Batteriezellenmoduls dargestellt. Es ist ersichtlich, dass dieser Deckel 20 ein im Wesentlichen rechteckiges Format hat, wobei im zentralen Bereich der Gasaufnahmeraum 21, hier ausgebildet als eine konkave Wölbung des einschichtigen Deckelmaterials, angeordnet ist. Insbesondere aus Figur 3 ist dabei ersichtlich, dass der Gasaufnahmeraum 21 nach unten offen ist, so dass sich ein Öffnungsbereich 22, der die Kontur des Gasaufnahmeraumes 21 aufweist, ausbildet. Ebenfalls aus Figur 3 ist deutlich ersichtlich, dass sich an den Gasaufnahmeraum 21 eine Auslassöffnung 23 anschließt. An diese Auslassöffnung 23 ist, wie aus Figur 2 ersichtlich, eine rohrförmige Anschlusseinrichtung 25 angeschlossen, die als T-Stück ausgebildet ist. Diese Anschlusseinrichtung 25 weist zwei voneinander wegweisende Rohrstutzen 26 zum Anschluss weiterer Verbindungsleitungen auf.

Wie in Figur 3 dargestellt, ist am Deckel 20 ein den Öffnungsbereich 22 umrandendes Dichtungselement 24 angeordnet.

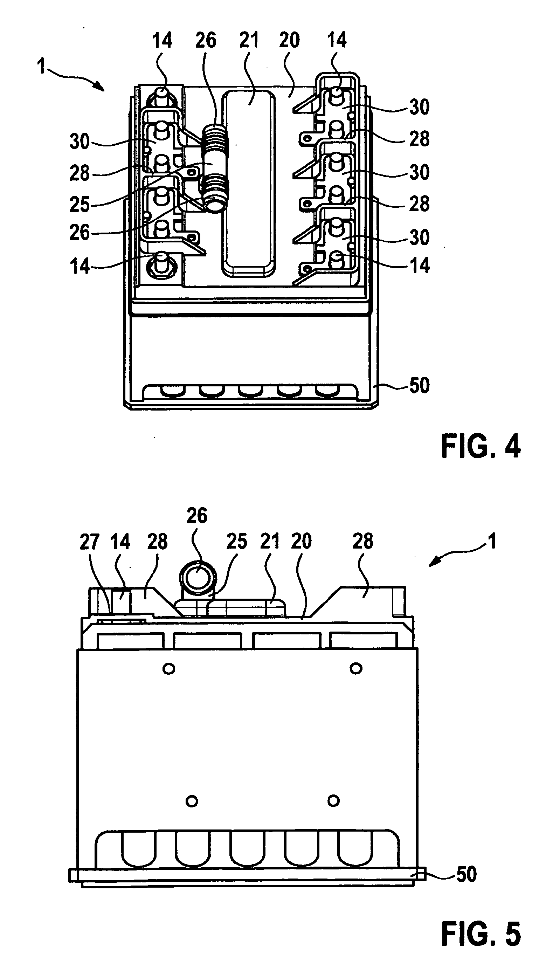

Bei einer Anordnung des Deckels 20 auf einer Mehrzahl von Batteriezellen 10, wie sie in Figur 4 an den herausragenden Terminals 14 erkennbar sind, überlagert der Gasaufnahmeraum 21 und damit auch der Öffnungsbereich 22 die Batteriezellen 10 quer, so dass der Gasaufnahmeraum 21 und der Öffnungsbereich 22 im Wesentlichen über den in Figur 1 dargestellten Entgasungsöffnungen 13 der Batteriezellen 10 verlaufen. Bei Öffnung einer Entgasungsöffnung 13 gelangt das Gas durch den Öffnungsbereich 22 in den Gasaufnahmeraum 21. Eine seitliche Ausströmung des Gases wird durch die Abdichtung mittels des Dichtungselementes 24 verhindert. Durch Ausbildung einer ebenen Oberfläche des Batteriezellenmoduls unter dem Öffnungsbereich 22 wird die Dichtungswirkung durch das Dichtungselement 24 verbessert.

Das im Gasaufnahmeraum 21 aufgenommene Gas kann durch die in Figur 3 erkennbare Auslassöffnung 23 in die Anschlusseinrichtung 25 und in deren Rohrstutzen 26 gelangen, so dass das Gas durch nicht dargestellte Leitungen an diesen Rohrstutzen 26 vom Batteriezellenmodul 1 wegtransportiert werden kann. Der Volumenstrom des Gases erfolgt aufgrund des relativ großen Überdrucks des entweichenden Gases.

In den Figuren 2 und 3 ist außerdem erkennbar, dass der Deckel 20 eine Vielzahl von auf jeder Seite angeordneten Löchern 27 aufweist. Die Anzahl der Löcher entspricht der Anzahl der Terminals 14 der schaltungstechnisch zu verbindenden Batteriezellen 10.

Aus Figur 4 ist ersichtlich, dass die Terminals 14 durch die Löcher 27 hindurchragen. Dabei sind zwischen den verschiedenen Löchern 27 beziehungsweise Terminals 14 Profilelemente 28 in Form von sogenannten Trennstegen angeordnet, die verhindern, dass Zellverbinder 30 mit Terminals 14 verbunden werden, mit denen konstruktiv jedoch gar keine elektrische Verbindung vorgesehen ist. Das heißt, dass die Zellverbinder 30 durch die Anordnung der Profilelemente 28 nur die Terminals 14 miteinander verbinden, mit denen schaltungstechnisch überhaupt eine elektrische Kontaktierung vorgesehen ist.

Dadurch wird einem Monteur ein einfaches und effizientes Mittel der Verhinderung von Montagefehlern hinsichtlich der Positionierung und Verbindung von Terminals und elektrischer Schaltung der Batteriezellen an die Hand gegeben, da durch die Profilelemente die Verbindung von Terminals, die einander nicht kontaktieren sollen, unmöglich gemacht oder zumindest erschwert wird. Das heißt, dass durch die Ausgestaltung des Deckels mit den Profilelementen ein sogenannter Poka-Yoke-Effekt realisiert wird. Die Anzahl der Löcher im Deckel entspricht vorzugsweise der Anzahl der miteinander zu kontaktierenden Terminals der Batteriezellen des Batteriezellenmoduls.

In Figur 5 ist ein erfindungsgemäßes Batteriezellenmodul 1 in Ansicht von der Seite dargestellt, wobei deutlich die Ausbildung des Rohrstutzens 26 zum Anschluss einer Entgasungsleitung sowie die konkave Wölbung des Gasaufnahmeraumes 21 erkennbar sind. Weiterhin ist ersichtlich, dass die Profilelemente 28 höher als die Terminals 14 bei Auflage des Deckels 20 auf den Batteriezellen 10 angeordnet sind, so dass eine fehlerhafte Verbindung von Terminals 14 durch Zellverbinder 30 vermieden wird.

Vorzugsweise ist der Deckel 20 zwischen den Zellverbindern 30 und Gehäusen der Batteriezellen angeordnet. Das heißt, dass in diesem Falle der Aufbau des Batteriezellenmoduls 1 derart realisiert ist, dass der Deckel 20 auf den Batteriezellen 10 beziehungsweise deren Gehäusen angeordnet ist und auf diesem Deckel 20 wiederum die Zellverbinder 30 angeordnet sind, die Terminals 14 der Batteriezellen 10 verbinden, die durch Löcher 27 im Deckel hindurchragen.

Ein Batteriezellenmodul 1 in der letztgenannten Ausführungsform wird derart hergestellt, dass ein Deckel 20 auf die Seite von mehreren zu einem auf einer Grundplatte 50 aufgestellten Block Batteriezellen 10 im Wesentlichen abdichtend aufgesetzt wird, an der sich die Terminals 14 der Batteriezellen 10 befinden, so dass Terminals 14 der Batteriezellen 10 durch Löcher 27 im Deckel 20 hindurchführen und danach die Terminals 14 der Batteriezellen 10 mit Zellverbindern 30 verbunden werden. Dabei sind die Seiten der Batteriezellen 10, an denen sich die Terminals 14 der Batteriezellen 10 befinden, auch die Seiten, an denen sich die Entgasungsöffnungen 13 der Batteriezellen befinden. Bei Ausgestaltung des Batteriezellenmoduls 1 mit den Profilelementen können nur Terminals 14 durch die Zellverbinder 30 miteinander verbunden werden, zwischen denen kein Profilelement 28 angeordnet ist, wodurch eine Fehl-Schaltung der einzelnen Batteriezellen 10 verhindert wird.

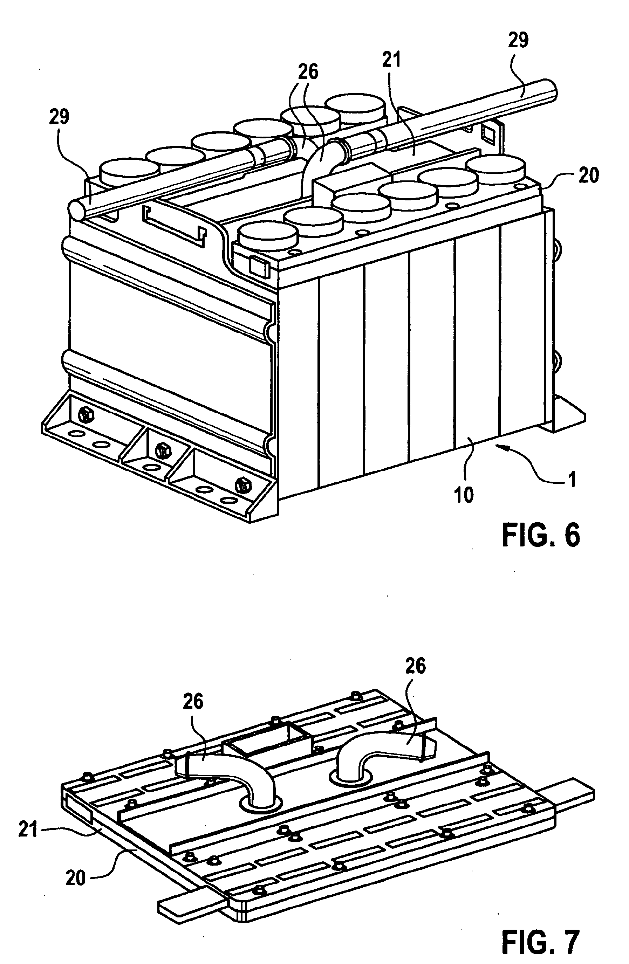

Wie Figur 6 entnehmbar ist, können sich an den Gasaufnahmeraum 21 auch zwei Rohrstutzen 26 anschließen, die in entgegengesetzte Richtungen weisen. An diese Rohrstutzen 26 können Leitungen 29 in Form von Schläuchen oder Rohren angeschlossen sein, die gegebenenfalls zu Auslassöffnungen in Gehäusen führen. Dadurch lässt sich in einfacher Weise eine strömungstechnische Reihenschaltung mehrerer erfindungsgemäßer Batteriezellenmodule erreichen.

In Figur 7 ist der in Figur 6 verwendete Deckel vergrößert dargestellt. Ersichtlich ist, dass die als Krümmer ausgeführten Rohrstutzen 26 vorzugsweise schwenkbar angeordnet sind, um eine flexible strömungstechnische Vernetzung der Batteriezellenmodule zu erreichen.

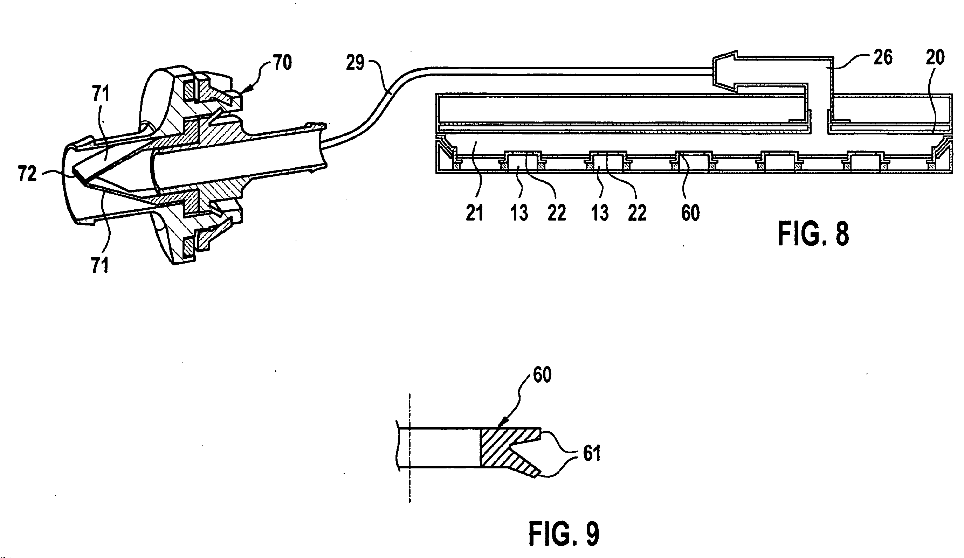

Die an die Rohstutzen 26 anschließbaren Leitungen 29 können, wie in Figur 8 dargestellt, an Rückschlagventile angeschlossen werden, zum Beispiel wie an das in Figur 8 gezeigte Lippenventil 70. Dieses Lippenventil 70 umfasst zwei Lippen 71, die in der dargestellten Ausführungsvariante in einem linearen Bereich miteinander verbunden sind. Dieser lineare Bereich ist ebenfalls der Bereich der Rissbildung 72, wenn im Gasaufnahmeraum 21 ein unzulässiger Überdruck besteht, der zwischen den Lippen 71 einen Riss erzeugen kann. Aufgrund elastischer Eigenschaften der Lippen 71 legen sich diese nach Rissbildung und bei Normalisierung der Druckverhältnisse im Gasaufnahmeraum 21 wieder aneinander an, so dass eine im Wesentlichen ausreichende Abdichtung gegen Gase aus der Umgebung des Lippenventils erreichbar ist. Das heißt, dass ein Lippenventil 70 vorzugsweise ohne Öffnung im Bereich der Rissbildung 72 zu montieren ist und erst bei erstmaligem Erreichen eines unzulässigen Überdrucks im Gasaufnahmeraum 21 sich eine Öffnung im Bereich der Rissbildung 72 ausbildet, um Gase aus dem Gasaufnahmeraum 21 entweichen zu lassen. Sinkt der Druck im Gasaufnahmeraum 21 wieder, schließen sich die Lippen 71 des Lippenventils 70 wieder, so dass der Gasaufnahmeraum 21 im Wesentlichen zur Umgebung abgedichtet ist und demzufolge keine Entzündung der im Gassammelraum und in einer oder mehreren Batteriezellen vorhandenen Gase durch einen in der Umgebung des Lippenventils gegebenenfalls bestehenden Brand erfolgen kann, und keine Feuchtigkeit in eine Batteriezelle eindringen kann.

Der in Figur 8 dargestellte Deckel 20 ist vorzugsweise derart ausgestaltet, dass er an seiner Unterseite statt eines sich großflächig ausbreitenden Öffnungsbereiches mehrere Gaseintrittsöffnungen 22 aufweist, und zwar bevorzugt in genau der Anzahl der Entgasungsöffnungen 13 der zum Batteriezellenmodul assemblierten Batteriezellen. Das heißt, dass vorzugsweise jeder Entgasungsöffnung 13 eine Gaseintrittsöffnung 22 im Deckel 20 zugeordnet ist. Die Abdichtung zwischen den Entgasungsöffnungen 13 und den Gaseintrittsöffnungen 22 wird dabei bevorzugt durch eine in Figur 9 dargestellte V-Ring-Dichtung 60 realisiert. Wenigstens ein Schenkel 61 der V-Ring-Dichtung 60 kann dabei im unbelasteten Zustand aus der Ebene der Dichtung herausgespreizt sein, so dass im montierten und belasteten Zustand dieser abgespreizte Schenkel 61 eine verstärkte Andruckkraft und demzufolge eine verbesserte Dichtungswirkung gegenüber dem Deckel 20 oder dem eine Entgasungsöffnung 13 ausbildenden Material realisiert.

Dabei ist die vorliegende Erfindung nicht auf die Anordnung der in Figur 9 dargestellten V-Ring-Dichtung 60 beziehungsweise des Lippenventils 70 an der Ausgestaltungsvariante des erfindungsgemäßen Batteriezellenmoduls beschränkt, welches statt eines Öffnungsbereichs Gaseintrittsöffnungen 22 aufweist, sondern es kann davon abweichend die Erfindung auch vorsehen, dass bei Batteriezellenmodulen mit Öffnungsbereich im Deckel 20 der Deckel 20 mit der V-Ring-Dichtung 60 abgedichtet ist und/oder dass an den Rohrstutzen 26 ein Lippenventil 70 angeschlossen ist.

## Patentansprüche

1. Batteriezellenmodul, umfassend eine Mehrzahl von Batteriezellen (10), insbesondere Lithium-Ionen-Batteriezellen, die jeweils eine Entgasungsöffnung (13) aufweisen, sowie weiterhin einen mehreren Batteriezellen (10) zugeordneten Gasaufnahmeraum (21) zur zumindest temporären Aufnahme von aus diesen Batteriezellen (10) entwichenem Gas, wobei das Volumen des Gasaufnahmeraums (12) unmittelbar mit den Entgasungsöffnungen (13) verbunden ist,
**dadurch gekennzeichnet, dass**
der Gasaufnahmeraum (21) mehrere Gaseintrittsöffnungen (22) aufweist, die mit jeweils einer Entgasungsöffnung (13) einer Batteriezelle (10) strömungstechnisch verbunden sind und wobei im Verbindungsbereich zwischen einem eine jeweilige Entgasungsöffnung (13) ausgebildeten Material und einem eine jeweilige Gaseintrittsöffnung (22) ausbildenden Material wenigstens eine mehrschenklige Dichtung angeordnet ist.

2. Batteriezellenmodul nach Anspruch 1, bei dem der Gasaufnahmeraum (21) in Richtung der Batteriezellen (10) geöffnet ist und der Öffnungsbereich (22) des Gasaufnahmeraumes (21) sich über mehrere Batteriezellen (10) erstreckt.

3. Batteriezellenmodul nach einem der vorhergehenden Ansprüche, bei dem der Gasaufnahmeraum (21) eine Auslassöffnung (23) zur Ableitung des aufgenommenen Gases aufweist.

4. Batteriezellenmodul nach Anspruch 3, bei dem an die Auslassöffnung (23) ein Rückschlagventil angeschlossen ist und das Rückschlagventil ein Lippenventil (70) ist.

5. Batteriezellenmodul nach Anspruch 4, bei dem das Lippenventil (70) eine Sollbruchstelle aufweist, die derart ausgestaltet ist, dass in ihr bei Überschreitung eines bestimmten Gasdrucks im Gassammelraum ein Riss entsteht, der eine Öffnung entstehen lässt, aus der Gas aus dem Gassammelraum ausströmbar ist.

6. Verfahren zum Betreiben eines Batteriezellenmoduls gemäß Anspruch 5, bei dem bei Überschreitung des bestimmten Gasdrucks im Gassammelraum die Öffnung erzeugt wird, und bei danach erfolgender Unterschreitung des bestimmten Gasdrucks im Gassammelraum das Lippenventil (70) den Gassammelraum im Wesentlichen zur Umgebung abdichtet.

7. Batterie, insbesondere Lithium-Ionen-Batterie, umfassend mehrere der Batteriezellenmodule gemäß einem der Ansprüche 1 bis 5, wobei die Batteriezellenmodule (1) in einem Gesamtgehäuse angeordnet sind und Gassammelräume der Batteriezellenmodule (1) strömungstechnisch mit einer Entgasungsleitung verbunden sind, die an einen Gasauslass im Gesamtgehäuse angeschlossen ist.

8. Kraftfahrzeug, insbesondere elektromotorisch antreibbares Kraftfahrzeug, mit einem Batteriezellenmodul nach einem der Ansprüche 1 bis 5 oder mit einer Batterie nach Anspruch 7, wobei das Batteriezellenmodul (1). beziehungsweise die Batterie mit einem Antriebssystem des Kraftfahrzeuges verbunden ist.

## Claims

1. Battery cell module comprising a plurality of battery cells (10), in particular lithium-ion battery cells, that each comprise a degassing orifice (13) and furthermore a gas receiving chamber (21) that is allocated to several battery cells (10) for at least temporarily receiving gases that are escaping from these battery cells (10), wherein the volume of the gas receiving chamber (12) is directly connected to the degassing orifices (13),
**characterized in that**
the gas receiving chamber (21) comprises several gas inlet orifices (22) that are flow-connected in each case to a degassing orifice (13) of a battery cell (10) and wherein at least one multi-limb seal is arranged in the connecting region between a material that forms a respective degassing orifice (13) and a material that forms a respective gas inlet orifice (22).

2. Battery cell module according to Claim 1, wherein the gas receiving chamber (21) is open in the direction towards the battery cells (10) and the opening region (22) of the gas receiving chamber (21) extends over several battery cells (10).

3. Battery cell module according to either one of the preceding claims, wherein the gas receiving chamber (21) comprises an outlet orifice (23) for discharging the gas that has been received into said gas receiving chamber.

4. Battery cell module according to Claim 3, wherein a non-return valve is connected to the outlet orifice (23) and the non-return valve is a lip valve (70).

5. Battery cell module according to Claim 4, wherein the lip valve (70) comprises a predetermined breaking site that is designed in such a manner that in the event of a predetermined gas pressure being exceeded in the gas receiving chamber a tear occurs in said lip valve, which tear allows an opening to be produced through which gas can flow out of the gas receiving chamber.

6. Method for operating a battery cell module in accordance with Claim 5, wherein an opening is produced in the event of a predetermined gas pressure in the gas receiving chamber being exceeded and in the event of a subsequent shortfall of the predetermined gas pressure in the gas receiving chamber the lip valve (70) essentially seals the gas receiving chamber with respect to the environment.

7. Battery, in particular a lithium ion battery, comprising several of the battery cell modules in accordance with any one of Claims 1 to 5, wherein the battery cell modules (1) are arranged in a collective housing and gas receiving chambers of the battery cell modules (1) are flow-connected to a degassing line that is connected to a gas outlet in the collective housing.

8. Motor vehicle, in particular a motor vehicle that can be driven by an electric motor, which motor vehicle comprises a battery cell module according to any one of Claims 1 to 5 or comprises a battery according to Claim 7, wherein the battery cell module (1) or rather the battery is connected to a drive system of the motor vehicle.

## Revendications

1. Module de cellules de batterie, comprenant une multiplicité de cellules de batterie (10), en particulier des cellules de batterie lithium-ions, qui présentent chacune un orifice de dégazage (13), ainsi qu'en outre une chambre de collecte de gaz (21) associée à plusieurs cellules de batterie (10) pour la réception au moins temporaire de gaz échappés de ces cellules de batterie (10), dans lequel le volume de la chambre de collecte de gaz (21) est relié directement aux orifices de dégazage (13), **caractérisé en ce que** la chambre de collecte de gaz (21) présente plusieurs orifices d'entrée de gaz (22), qui sont reliés chacun en écoulement à un orifice de dégazage (13) d'une cellule de batterie (10) et dans lequel au moins un joint d'étanchéité à plusieurs branches est disposé dans la région de raccordement entre un matériau formant un orifice de dégazage respectif (13) et un matériau formant un orifice d'entrée de gaz respectif (22).

2. Module de cellules de batterie selon la revendication 1, dans lequel la chambre de collecte de gaz (21) est ouverte en direction des cellules de batterie (10) et la région d'ouverture (22) de la chambre de collecte de gaz (21) s'étend au-dessus de plusieurs cellules de batterie (10).

3. Module de cellules de batterie selon l'une quelconque des revendications précédentes, dans lequel la chambre de collecte de gaz (21) présente un orifice de sortie (23) pour l'évacuation du gaz contenu.

4. Module de cellules de batterie selon la revendication 3, dans lequel une soupape anti-retour est raccordée à l'orifice de sortie (23) et la soupape anti-retour est une soupape à bec (70).

5. Module de cellules de batterie selon la revendication 4, dans lequel la soupape à bec (70) présente une zone de rupture préférée, qui est configurée de telle manière que, en cas de dépassement d'une pression de gaz déterminée dans la chambre de collecte de gaz, il y apparaisse une fissure, qui fait apparaître une ouverture, par laquelle du gaz peut s'échapper hors de la chambre de collecte de gaz.

6. Procédé de conduite d'un module de cellules de batterie selon la revendication 5, dans lequel l'ouverture est produite en cas de dépassement de la pression de gaz déterminée dans la chambre de collecte de gaz et, lors d'une descente ultérieure en dessous de la pression de gaz déterminée dans la chambre de collecte de gaz, la soupape à bec (70) ferme la chambre de collecte de gaz de façon essentiellement hermétique vis-à-vis de l'atmosphère extérieure.

7. Batterie, en particulier batterie lithium-ions, comprenant plusieurs des modules de cellules de batterie selon l'une quelconque des revendications 1 à 5, dans laquelle les modules de cellules de batterie (1) sont disposés dans un boîtier global et des chambres de collecte de gaz des modules de cellules de batterie (1) sont raccordées en écoulement à une conduite de dégazage, qui est raccordée à une sortie de gaz dans le boîtier global.

8. Véhicule automobile, en particulier véhicule automobile propulsé par un moteur électrique, avec un module de cellules de batterie selon l'une quelconque des revendications 1 à 5 ou avec une batterie selon la revendication 7, dans lequel le module de cellules de batterie (1) ou la batterie est reliée à un système d'entraînement du véhicule automobile.
